# EUROPEAN PATENT SPECIFICATION

(11) **EP 0 964 504 B1**
(45) Date of publication and mention of the grant of the patent: **06.05.2004**
(21) Application number: 99118477.1
(22) Date of filing: 25.01.1995
(51) Int. Cl.: H02M 3/335

(54) **Switching power source apparatus**
Schaltnetzteil
Appareil d'alimentation de puissance à découpage

(30) Priority: 28.01.1994 JP 800994; 07.02.1994 JP 1303994; 07.02.1994 JP 1304094
(43) Date of publication of application: 15.12.1999
(62) Divisional of application: 95100975.2
(73) Proprietor: MATSUSHITA ELECTRIC INDUSTRIAL CO., LTD., Kadoma-shi, Osaka 571 (JP); SHINDENGEN ELECTRIC MANUFACTURING COMPANY, LIMITED, Hanno-shi, Saitama-ken 357 (JP)
(72) Inventor: Takuya, Ishi, Suita-shi, Osaka 564 (JP); Haruo, Watanabe, Hidaka-shi, Saitama 350-12 (JP); Yoshinori, Kobayashi, Yamatecho, Hannou-City, Saitama 357-0031 (JP); Sekine, Yutaka, Iruma-shi, Saitama 358 (JP)
(74) Representative: Grünecker, Kinkeldey, Stockmair & Schwanhäusser Anwaltssozietät

(56) References cited:
- DE-A- 4 131 240
- GB-A- 2 261 331
- PATENT ABSTRACTS OF JAPAN vol. 006, no. 032 (E-096), 26 February 1982 (1982-02-26) & JP 56 150972 A (HITACHI LTD), 21 November 1981 (1981-11-21)

## Description

### Background of the Invention:

### 1.Industrial Field of Utilization

The present invention relates to a switching power source apparatus which receives alternating current such as commercial alternating-current power source as input.

### 2.Related Art of the Invention

The switching power source apparatus is widely used recently as a power source circuit for various electronic appliances owing to its efficient power transforming characteristic. Document DE 4131240 discloses such a switching power source apparatus. In most of such circuits, however, since the input rectifying circuit of capacitor input type is used, the power factor is poor, and harmonic currents contained in the input current may cause troubles in other electronic appliances.

A conventional switching power source apparatus is described below.

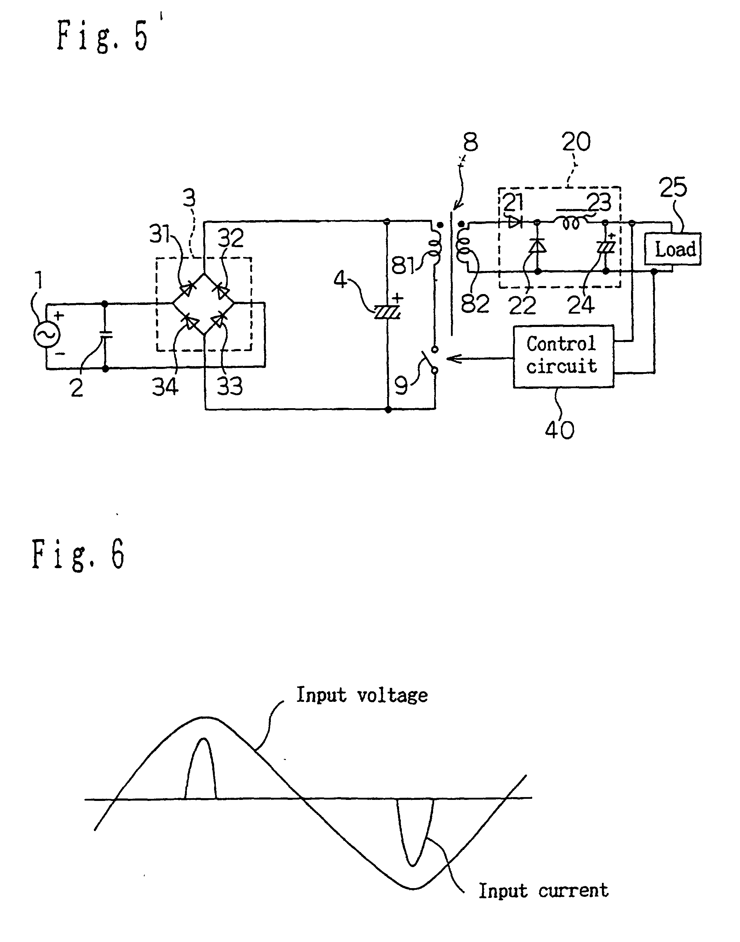

Fig. 5 shows a circuit construction of a conventional switching power source apparatus. In Fig. 5, reference numeral 1 denotes an input alternating-current power source, and 2 is an input filter capacitor, which is connected to both ends of the input alternating-current power source 1. Reference numeral 3 denotes a full-wave rectifying circuit, which is composed of diodes 31 to 34. Reference numeral 4 is a smoothing capacitor, and an input rectifying circuit of capacitor input type which rectifies and smoothes the alternating-current input voltage of the input alternating-current power source 1 is constituted with the full-wave rectifying circuit 3 and smoothing capacitor 4. Reference numeral 8 represents a transformer, which possesses a primary winding 81 and a secondary winding 82. Reference numeral 9 is a switch element, and a series circuit of the primary winding 81 and switch element 9 is connected to both ends of the smoothing capacitor 4. Reference numeral 20 is a rectifying and smoothing circuit, composed of diodes 21, 22, a choke coil 23, and a capacitor 24, which rectifies and smoothes the voltage generated in the secondary winding 82 by on/off action of the switch element 9, and supplies an output direct-current voltage to a load 25. Reference numeral 40 is a control circuit, which controls the on/off ratio of the switch element 9 so as to stabilize the output direct-current voltage supplied to the load 25.

In thus constituted switching power source apparatus, an input waveform is shown in Fig. 6. For a sinusoidal alternating-current input voltage, the full-wave rectifying circuit 3 conducts at only near its peak value, and the charging current to the smoothing capacitor 4 is concentrated, so that the input current waveform has a peak form short in the conduction period.

In such conventional constitution, however, the power factor is poor, and its input current contains lots of harmonic currents, which may cause troubles to other electronic appliances.

Document JP56150972 discloses a rectifying circuit with reduced harmonic currents and improved power factor.

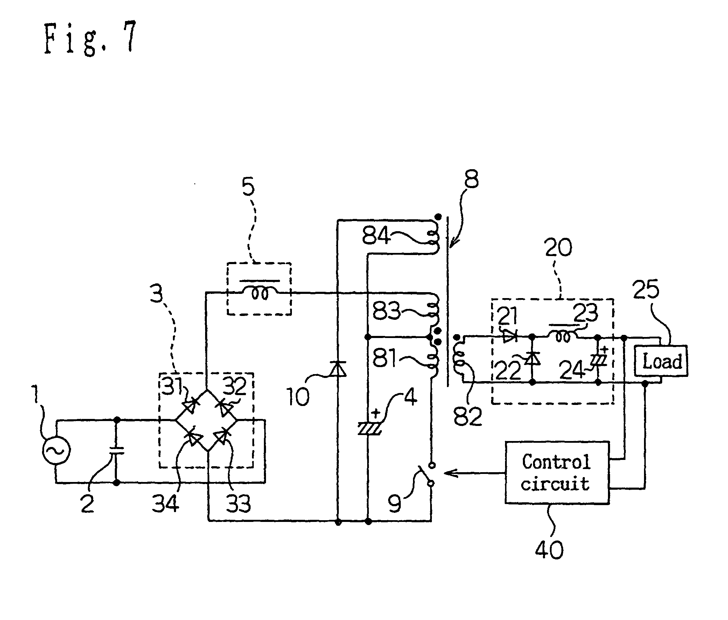

The present inventors, prior to the invention, devised a switching power source apparatus as shown in Fig. 7. Herein, the parts having the same actions as in Fig. 5 are identified with same reference numerals. In Fig. 7, reference numeral 1 is an input alternating-current power source, and 2 is an input filter capacitor, which is connected to both ends of the input alternating-current power source 1. Reference numeral 3 denotes a full-wave rectifying circuit, composed of diodes 31 to 34. Reference numeral 4 is a smoothing capacitor, and 5 is a choke coil, and one end of the choke coil 5 is connected to the positive electrode output end of the full-wave rectifying circuit 3. Reference numeral 8 represents a transformer, which comprises a primary winding 81, a secondary winding 82, a tertiary winding 83 connected to the other end of the choke coil 5, and a quaternary winding 84. A reference numeral 9 is a switch element, and a series circuit of the primary winding 81 and the switch element 9 is connected to both ends of the smoothing capacitor 4. Reference numeral 19 is a diode, and its series circuit with the quaternary winding 84 is connected to both ends of the smoothing capacitor 4. Reference numeral 20 is a rectifying and smoothing circuit, composed of diodes 21, 22, a choke coil 23, and a capacitor 24, which rectifies and smoothes the voltage generated in the secondary winding 82 by on/off action of the switch element 9, and supplies an output direct-current voltage to a load 25. Reference numeral 40 denotes a control circuit, which controls the on/off ratio of the switch element 9 so as to stabilize the output direct-current voltage supplied to the load 25. Supposing the voltage of the input alternating-current power source 1 to be Vi, the voltage of the smoothing capacitor to be Ec, the number of turns of the primary winding 81 to be N1, the number of turns of the tertiary winding 83 to be N3, their ratio of number of turns to be N = N3/N1, the number of turns of the quaternary winding 84 to be N4, and N4=N1, the operation is described below.

First, while the input alternating-current power source 1 is in the period of the polarity as shown in Fig. 6, when the switch element 9 is turned on, a voltage of N-Ec is generated in the tertiary winding 83. When the voltage Vi of the input alternating-current power source 1 is greater than (1-N)Ec, the diodes 31 and 33 conduct, and the current flows in the route of input alternating-current power source 1 → diode 31 → choke coil 5 → tertiary winding 83 → primary winding 81 → switch element 9 → diode 33 → input alternating-current power source 1, or input alternating-current power source 1 → diode 31 → choke coil 5 → tertiary winding 83 → smoothing capacitor 4 → diode 33 → input alternating-current power source 1. In the choke coil 5, Vi-(1-N)Ec is applied, and this current increases linearly at an inclination proportional to Vi-(1-N)Ec.

When the switch element 9 is turned off, the current flows in the route of input alternating-current power source 1 → diode 31 → choke coil 5 → tertiary winding 83 → smoothing capacitor 4 → diode 33 → input alternating-current power source 1. In the choke coil 5, Vi-(1+N)Ec is applied, and this current decreases linearly and soon becomes zero.

When the polarity of the input alternating-current power source 1 is inverted from the state in Fig. 6, the diode 32 acts instead of the diode 31, and the diode 34, instead of the diode 33.

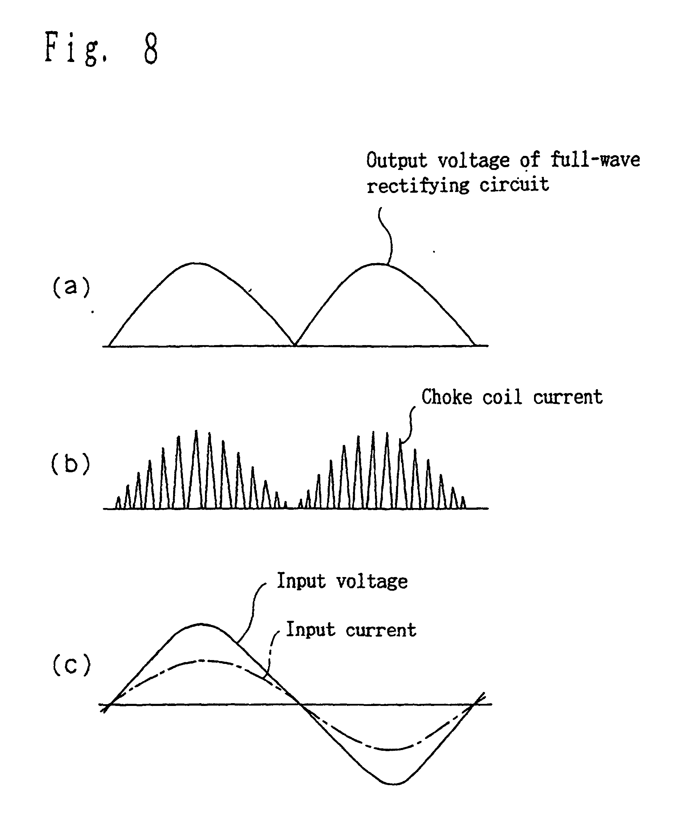

In the above operation, when N=1, the operation waveforms of the parts are shown in Fig. 8. In Fig. 8, (a) denotes an output voltage waveform of the full-wave rectifying circuit 3, (b) is a current waveform flowing in the choke coil 5, and (c) is an input current waveform. The current flowing in the choke coil 5 is a sawtooth waveform having a peak value proportional to the voltage of the input alternating-current power source 1. It is smoothed by the filter capacitor 2 to produce an input current waveform, which is a sinusoidal waveform approximately proportional to the input alternating-current voltage. Incidentally, in the case of N < 1, the full-wave rectifying circuit 3 does not conduct when Vi-(1-N)Ec < 0, and the input current waveform becomes as shown by broken line in the diagram.

However, not only the current flowing in the choke coil 5 flows through the tertiary winding 83, but also its induction current flows also into the primary winding 81 when the switch element 9 is ON, or into the quaternary winding 84 when the switch element 9 is OFF, and hence the conduction loss is large, and the efficiency as switching power source equipment is poor.

To solve the problems, it is hence a primary object of the invention to present a switching power source apparatus of excellent power factor, input characteristic of few input current harmonic currents, and high efficiency.

### SUMMARY OF THE INVENTION

To achieve the object, the switching power source apparatus of the invention comprises the features of claims 1 and 3, respectively. Preferred embodiments thereof are subject matter of the dependent claims.

### Brief Description of the Drawings

Fig. 1 is a circuit constitutional diagram of a switching power source apparatus in the first embodiment of the invention.
Fig. 2 is a circuit constitutional diagram of a switching power source apparatus in the second embodiment of the invention.
Fig. 3 is a circuit constitutional diagram of a switching power source apparatus in the third embodiment of the invention.
Fig. 4 is a circuit constitutional diagram of a switching power source apparatus in the fourth embodiment of the invention.
Fig. 5 is a circuit constitutional diagram of a conventional switching power source apparatus.
Fig. 6 is an essential characteristic diagram of the prior art.
Fig. 7 is a circuit constitutional diagram of a switching power source apparatus for explaining the problems to be solved by the invention.
Fig. 8 is an essential characteristic diagram of Fig. 7.

### PREFERRED EMBODIMENTS

### (Embodiment 1)

An embodiment of the invention is described below while referring to the drawings.

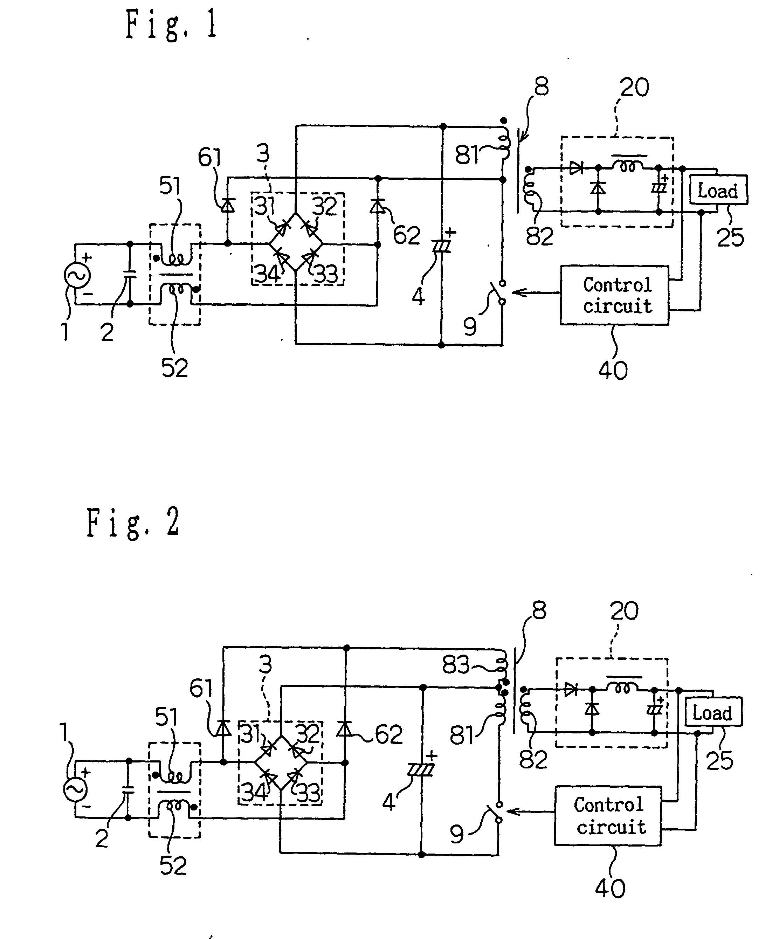

In Fig. 1, reference numeral 1 denotes an input alternating-current power source, and 2 is a filter capacitor, which is connected to both ends of the input alternating-current power source. Reference numeral 3 is a full-wave rectifying circuit, composed of diodes 31 to 34, which rectifies the input alternating-current voltage of the input alternating-current power source 1. Reference numeral 4 is a smoothing capacitor, which is connected to the output end of the full-wave rectifying circuit 3. Reference numeral 61 is a first diode, 62 is a second diode, and the anode terminals of the first diode 61 and second diode 62 are connected to the input alternating-current power source 1, and the cathode terminals are connected with each other. Reference numeral 8 represents a transformer, which possesses a primary winding 81 and a secondary winding 82. Reference numeral 9 denotes a switch element, and a series circuit of the primary winding 81 and switch element 9 is connected to both ends of the smoothing capacitor 4. The connection point of the primary winding 81 and switch element 9, and the cathode terminals of the first diode 61 and second diode 62 are connected with each other. Reference numeral 20 is a rectifying and smoothing circuit, which is composed of diodes 21, 22, a choke coil 23, and a capacitor 24. The rectifying and smoothing circuit 20 is connected to the secondary winding 82, and rectifies and smoothes the voltage generated in the secondary winding 82 by on/off action of the switch element 9. Reference numeral 25 represents a load, which is connected to the output end of the rectifying and smoothing circuit 20, and a direct-current output voltage is supplied. Reference numeral 40 is a control circuit, which controls the on/off ratio of the switch element 9 so as to stabilize the direct-current output voltage supplied to the load 25. Herein, the portion composed of the smoothing capacitor 4, transformer 8, switch element 9, rectifying and smoothing circuit 20, load 25 and control circuit 40 operates same as an ordinary DC/DC converter, and hence the explanation is omitted.

One of first and second choke coils 51, 52 is connected to the both ends of the input alternating-current power source 1. At the other end of the first choke coil 51, the anode terminals of the first diode 61 and diode 31 are connected, and at the other end of the second choke coil 52, the anode terminals of the second diode 62 and diode 32 are connected. The cathode terminals of the first and second diodes are connected to the connection point of the primary winding 81 and switch element 9. The cathode terminals of the diode 31 and diode 32 are connected to the connection point of the smoothing capacitor 4 and primary winding 81. The cathode terminals of the diodes 33, 34 are connected to both ends of the input alternating-current power source 1, and the anode terminals are connected to the connection point of the switch element 9 and smoothing capacitor 4.

In thus constituted switching power source apparatus, the operation is described below. First, while the polarity of the input alternating-current power source 1 is in the period in Fig. 1, when the switch element 9 is turned on, the diodes 61 and 33 conduct, and the current flows in the route of input alternating-current power source 1 → first choke coil 51 → diode 61 → switch element 9 → diode 33 → input alternating-current power source 1. In the first choke coil 51, the voltage of the input alternating-current power source 1 is applied, and this current increases linearly at an inclination proportional to the voltage of the input alternating-current power source 1.

When the switch element 9 is turned off, the diode 31 conducts instead of the diode 61, and the current flows in the route of input alternating-current power source 1 → first choke coil 51 → diode 31 → smoothing capacitor 4 → diode 33 → input alternating-current power source 1. In the first choke coil 51, the difference of the voltages of the input alternating-current power source 1 and smoothing capacitor 4 is applied, and this current decreases linearly, and soon becomes zero.

When the polarity of the input alternating-current power source 1 is inverted, the second choke coil 52 operates instead of the first choke coil 51, the diode 62, instead of the diode 61, the diode 32 instead of the diode 31, and the diode 34, instead of the diode 33.

By repetition of such operation, the current flowing in the first and second choke coils 51, 52 becomes a sawtooth waveform possessing a peak value proportional to the voltage of the input alternating-current power source 1. It is smoothed by the filter capacitor to obtain an input current waveform, which is a sinusoidal waveform approximately proportional to the input alternating-current voltage.

In the first embodiment, the input waveform is improved, and enhancement of power factor and reduction of harmonic currents are realized, and as compared with the switching power source apparatus shown in Fig. 7, the current of the first and second choke coils 51 and 52 flows without passing through the transformer 8, so that the conduction loss can be reduced.

### (Embodiment 2)

A second embodiment of the invention is described below. Fig. 2 is a circuit constitutional diagram showing the sixth embodiment of the invention. In Fig. 2, what differs from the constitution in Fig. 1 is that the transformer 8 further comprises a tertiary winding 83 having one end connected to one end of the primary winding 81, and that the cathode terminals of the first and second diodes 61, 62 are connected to the other end of the tertiary winding 83. The voltage of the smoothing capacitor 4 is supposed to be Ec, the number of turns of the primary winding 81 to be N1, and the number of turns of the tertiary winding 83 to be N3, assuming N = N3/N1.

In thus constituted switching power source apparatus, the operation is described below. First, while the polarity of the input alternating-current power source 1 is in the period in Fig. 2, when the switch element 9 is turned on, a voltage of N-Ec is generated in the tertiary winding 83. When the voltage Vi of the input alternating-current power source 1 is greater than (1-N)Ec, the diodes 61 and 33 conduct, and the current flows in the route of input alternating-current power source 1 → first choke coil 51 → diode 61 → tertiary winding 83 → primary winding 81 → switch element 9 → diode 33 → input alternating-current power source 1, and input alternating-current power source 1 → first choke coil 51 → diode 61 → tertiary winding 83 → smoothing capacitor 4 → diode 33 → input alternating-current power source 1. In the first choke coil 51, Vi-(1-N)Ec is applied, and this current increases linearly at an inclination proportional to Vi(1-N)Ec.

When the switch element 9 is turned off, the diode 31 conducts instead of the diode 61, and the current flows in the route of input alternating-current power source 1 → first choke coil 51 → diode 31 → smoothing capacitor 4 → diode 33 → input alternating-current power source. In the first choke coil 51, Vi-Ec is applied, and this current decreases linearly, and soon becomes zero.

When the polarity of the input alternating-current power source 1 is inverted from the state in Fig. 2, the second choke coil 52 operates instead of the choke coil 51, the diode 62, instead of the diode 61, the diode 32, instead of the diode 31, and the diode 34, instead of the diode 33.

### (Embodiment 3)

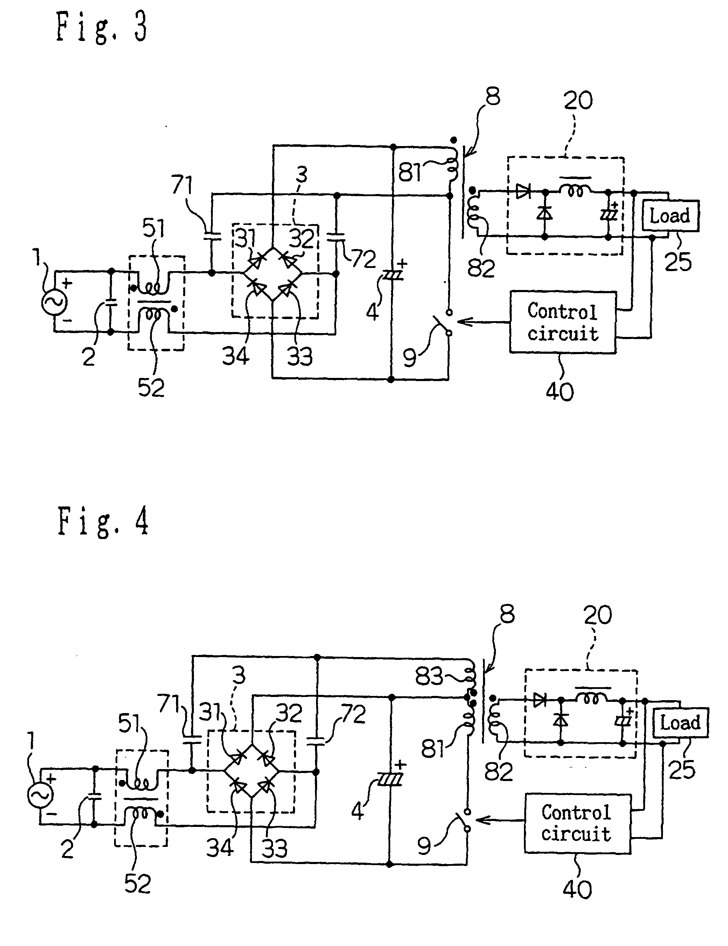

A third embodiment of the invention is described below. Fig. 3 is a circuit constitutional diagram showing the third embodiment of the invention. In Fig. 3, what differs from the constitution in Fig. 1 is that the first and second diodes 61, 62 are replaced by first and second capacitors 71, 72.

In thus constituted switching power source apparatus, the operation is described below. First, while the polarity of the input alternating-current power source 1 is in the period in Fig. 3, when the switch element 9 is turned on, the current flows and increases in the route of input alternating-current power source 1 → first choke coil 51 → capacitor 71 → switch element 9 → diode 33 → input alternating-current power source 1. As charging of the capacitor 71 is promoted and the potential at the connection point of the capacitor 71 and first choke coil 51 climbs up, being about to exceed the potential of the smoothing capacitor 4, the diode 31 conducts, and the current flows in the route of input alternating-current power source 1 → first choke coil 51 → diode 31 → smoothing capacitor 4 → diode 33 → input alternating-current power source 1.

When the switch element 9 is turned off, the current flows in the route of input alternating-current power source 1 → first choke coil 51 → diode 31 → smoothing capacitor 4 → diode 33 → input alternating-current power source 1, and at the same time the excitation current of the transformer 8 flows in the route of primary winding 81 → capacitor 71 → diode 31 → primary winding 81, and the electric charge accumulated in the capacitor 71 is discharged.

When the polarity of the input alternating-current power source 1 is inverted from the state in Fig. 3, the second choke coil 52 operates instead of the first choke coil 51, the capacitor 72, instead of the capacitor 71, the diode 32, instead of the diode 31, and the diode 34, instead of the diode 33.

### (Embodiment 4)

A fourth embodiment of the invention is described below. Fig. 4 is a circuit constitutional diagram showing the fourth embodiment of the invention. In Fig. 4, what differs from the constitution in Fig. 2 is that the first and second diodes 61, 62 are replaced by first and second capacitors 71, 72. The number of turns of the primary winding 81 is supposed to be N1, and the number of turns of the tertiary winding 83 to be N3, assuming N = N3/N1.

In Fig. 7 showing a prior invention example, a series circuit of diode 10 and quaternary winding 84 is provided at both ends of the smoothing capacitor 4, and the magnetic reset of the transformer 8 can be done efficiently. However, the effect of the presence or absence of the series circuit of the diode 10 and quaternary winding 84 on the operation of the invention is not relatively large on the effect of the invention, and is not indispensable for explanation of the invention, and hence it was omitted in the foregoing embodiments.

In the embodiments, the circuit constitution on the basis of feed-forward converter has been described, but similar effects will be obtained by other DC/DC converters.

## Claims

1. A switching power source apparatus comprising:
first and second choke coils (51,52) mutually connected electromagnetically, with one end of each connected to both ends of an input alternating-current power source (1),
a full-wave rectifying circuit (3) for rectifying the input alternating-current voltage of the input alternating-current power source (1) through the first and second choke coils (51,52),
a transformer (8) possessing a primary winding (81) having one end connected to the positive electrode output terminal of the full-wave rectifying circuit (3), and a secondary winding (82),
a switch element (9) connected between the other end of the primary winding (81) and the negative electrode output terminal of the full-wave rectifying circuit (3),
a smoothing capacitor (4) connected parallel to a series circuit of the primary winding (81) and the switch element (9),
first and second diodes (61,62) having anode terminals connected to a pair of input terminals of the full-wave rectifying circuit (3), and cathode terminals connected to the connection point of the primary winding (81) and the switch element (9),
a rectifying and smoothing circuit (20) for rectifying and smoothing the output of the secondary winding (82), and supplying a direct-current output voltage to a load (25), and
a control circuit (40) for controlling the on/off ratio of the switch element (9) so that the direct-current output voltage may be stabilized.

2. A switching power source apparatus of claim 1,
wherein
the transformer (8) further comprises a tertiary winding (83) having one end connected to either terminal of the primary winding (81), and
the cathode terminals of the first and second diodes (61,62) are connected to the other end of the tertiary winding (83).

3. A switching power source apparatus comprising:
first and second choke coils (51,52) mutually coupled electromagnetically, with one end of each connected to both ends of an input alternating-current power source (1),
a full-wave rectifying circuit (3) for rectifying the input alternating-current voltage of the input alternating-current power source (1) through the first and second choke coils (51,52),
a transformer (8) possessing a primary winding (81) having one end connected to the positive electrode output terminal of the full-wave rectifying circuit (3), and a secondary winding (82),
a switch element (9) connected between the other end of the primary winding (81) and the negative electrode output terminal of the full-wave rectifying circuit (3),
a smoothing capacitor (4) connected parallel to a series circuit of the primary winding (81) and the switch element (9),
first and second capacitors (71,72) having one end of each connected to a pair of input terminals of the full-wave rectifying circuit (3), and the other ends commonly connected to the connection point of the primary winding (81) and the switch element (9),
a rectifying and smoothing circuit (20) for rectifying and smoothing the output of the secondary winding (82), and supplying a direct-current output voltage to a load (25), and
a control circuit (40) for controlling the on/off ratio of the switch element (9) so that the direct-current output voltage may be stabilized.

4. A switching power source apparatus of claim 3,
wherein
the transformer (8) further comprises a tertiary winding (83) having one end connected to either terminal of the primary winding (81), and
the connection point of the first and second capacitors (71,72) is connected to the other end of the tertiary winding (83).

5. A switching power source apparatus of any one of claims 1 to 5, wherein
the control circuit (40) detects the voltage of the smoothing capacitor (4) or a voltage corresponding to the voltage of the smoothing capacitor (4), and functions to vary the switching frequency of the switch element (9) so as to stabilize the detected voltage.

## Patentansprüche

1. Schalt-Stromversorgungsgerät, das umfasst:
eine erste und zweite Drosselspule (51, 52), die gegenseitig elektromagnetisch verbunden sind, wobei ein Ende von jeder mit beiden Enden einer Eingangs-Wechselstromquelle (1) verbunden sind,
eine Vollweg-Gleichrichtungsschaltung (3), die die Eingangs-Wechselspannung der Eingangs-Wechselstromquelle (1) durch die erste und zweite Drosselspule (51, 52) gleichrichtet,
einen Transformator (8), der eine Primärwicklung (81), deren eines Ende mit einem positiven Elektrodenausgangsanschluss der Vollweg-Gleichrichtungsschaltung (3) verbunden ist, und eine Sekundärwicklung (82) besitzt,
ein Schaltelement (9), das zwischen das andere Ende der Primärwicklung (81) und den negativen Elektrodenausgangsanschluss der Vollweg-Gleichrichtungsschaltung (3) geschaltet ist,
einen Glättungskondensator (4), der mit einem Serienkreis aus der Primärwicklung (81) und dem Schaltelement (9) parallel geschaltet ist,
eine erste und zweite Diode (61, 62) mit Anodenanschlüssen, die mit einem Paar von Eingangsanschlüssen der Vollweg-Gleichrichtungsschaltung (3) verbunden sind, und Kathodenanschlüssen, die mit dem Verbindungspunkt der Primärwicklung (81) und dem Schaltelement (9) verbunden sind,
eine Gleichrichtungs- und Glättungsschaltung (20), die den Ausgang der Sekundärwicklung (82) gleichrichtet und glättet und eine Gleichstrom-Ausgangsspannung an eine Last (25) liefert, und
eine Steuerschaltung (40), die das Ein/Aus-Verhältnis des Schaltelements (9) so steuert, dass die Gleichstrom-Ausgangsspannung stabilisiert werden kann.

2. Schalt-Stromversorgungsgerät nach Anspruch 1, wobei
der Transformator (8) des Weiteren eine Tertiärwicklung (83) umfasst, deren eines Ende mit einem Anschluss der Primärwicklung (81) verbunden ist, und
die Kathodenanschlüsse der ersten und zweiten Diode (61, 62) mit dem anderen Ende der Tertiärwicklung (83) verbunden sind.

3. Schaltstromversorgungsgerät, das umfasst:
eine erste und zweite Drosselspule (51, 52), die gegenseitig elektromagnetisch verbunden sind, wobei ein Ende von jeder mit beiden Enden einer Eingangs-Wechselstromquelle (1) verbunden sind,
eine Vollweg-Gleichrichtungsschaltung (3), die die Eingangs-Wechselspannung der Eingangs-Wechselstromquelle (1) durch die erste und zweite Drosselspule (51, 52) gleichrichtet,
einen Transformator (8), der eine Primärwicklung (81), deren eines Ende mit einem positiven Elektrodenausgangsanschluss der Vollweg-Gleichrichtungsschaltung (3) verbunden ist, und eine Sekundärwicklung (82) besitzt,
ein Schaltelement (9), das zwischen das andere Ende der Primärwicklung (81) und den negativen Elektrodenausgangsanschluss der Vollweg-Gleichrichtungsschaltung (3) geschattet ist,
einen Glättungskondensator (4), der mit einem Serienkreis aus der Primärwicklung (81) und dem Schaltelement (9) parallel geschaltet ist,
einen ersten und zweiten Kondensator (71, 72), wobei ein Ende von jedem mit einem Paar von Eingangsanschlüssen der Vollweg-Gleichrichtungsschaltung (3) verbunden ist, und die anderen Enden gemeinsam mit dem Verbindungspunkt der Primärwicklung (81) und dem Schaltelement (9) verbunden sind,
eine Gleichrichtungs- und Glättungsschaltung (20), die den Ausgang der Sekundärwicklung (82) gleichrichtet und glättet und eine Gleichstrom-Ausgangsspannung an eine Last (25) liefert, und
eine Steuerschaltung (40), die das Ein/Aus-Verhältnis des Schaltelements (9) so steuert, dass die Gleichstrom-Ausgangsspannung stabilisiert werden kann.

4. Schalt-Stromversorgungsgerät nach Anspruch 3, wobei
der Transformator (8) des Weiteren eine Tertiärwicklung (83) umfasst, deren eines Ende mit einem Anschluss der Primärwicklung (81) verbunden ist, und
der Verbindungspunkt des ersten und zweiten Kondensators (71, 72) mit dem anderen Ende der Tertiärwicklung (83) verbunden ist.

5. Schalt-Stromversorgungsgerät nach einem der Ansprüche 1 bis 5, wobei
die Steuerschaltung (40) die Spannung des Glättungskondensators (4) oder eine der Spannung des Glättungskondensators (4) entsprechende Spannung erfasst und die Schaltfrequenz des Schaltelements (9) verändert, um die erfasste Spannung zu stabilisieren.

## Revendications

1. Appareil d'alimentation électrique à découpage comprenant :
des première et seconde bobines d'arrêt (51,52) mutuellement connectées électromagnétiquement, une extrémité de chacune étant connectée aux deux extrémités d'une source d'alimentation à courant alternatif d'entrée (1),
un circuit de redressement double alternance (3) pour redresser la tension à courant alternatif d'entrée de la source d'alimentation à courant alternatif d'entrée (1) à travers les première et seconde bobines d'arrêt (51,52),
un transformateur (8) possédant un enroulement primaire (81) comportant une extrémité connectée à la borne de sortie d'électrode positive du circuit de redressement double alternance (3), et un enroulement secondaire (82),
un élément de commutation (9) connecté entre l'autre extrémité de l'enroulement primaire (81) et la borne de sortie d'électrode négative du circuit de redressement double alternance (3),
un condensateur de lissage (4) connecté en parallèle à un circuit série de l'enroulement primaire (81) et de l'élément de commutation (9),
des première et seconde diodes (61,62) comportant des bornes d'anode connectées à une paire de bornes d'entrée du circuit de redressement double alternance (3), et des bornes de cathode connectées au point de connexion de l'enroulement primaire (81) et de l'élément de commutation (9),
un circuit de redressement et de lissage (20) pour redresser et lisser la sortie de l'enroulement secondaire 82 et pour délivrer une tension de sortie à courant continu à une charge (25), et
un circuit de commande (40) pour commander le rapport marche/arrêt de l'élément de commutation (9) de sorte que la tension de sortie à courant continu peut être stabilisée.

2. Appareil d'alimentation électrique à découpage selon la revendication 1, dans lequel
le transformateur (8) comprend, en outre, un enroulement tertiaire (83) comportant une extrémité connectée à chaque borne de l'enroulement primaire (81), et
les bornes de cathode des première et seconde diode (61,62) sont connectées à l'autre extrémité de l'enroulement tertiaire (83).

3. Appareil d'alimentation électrique à découpage comprenant :
des première et seconde bobines d'arrêt (51,52) mutuellement couplées électromagnétiquement, une extrémité de chacune étant connectée aux deux extrémités d'une source d'alimentation à courant alternatif d'entrée (1),
un circuit de redressement double alternance (3) pour redresser une tension à courant alternatif d'entrée de la source d'alimentation à courant alternatif d'entrée (1) à travers les première et seconde bobines d'arrêt (51,52),
un transformateur (8) possédant un enroulement primaire (81) comportant une extrémité connectée à la borne de sortie d'électrode positive du circuit de redressement double alternance (3), et un enroulement secondaire (82),
un élément de commutation (9) connecté entre l'autre extrémité de l'enroulement primaire (81) et la borne de sortie d'électrode négative du circuit de redressement double alternance (3),
un condensateur de lissage (4) connecté en parallèle à un circuit série de l'enroulement primaire (81) de l'élément de commutation (9),
des premier et second condensateurs (71,72) comportant une extrémité de chacun connectée à une paire de bornes d'entrée du circuit de redressement double alternance (3), et les autres extrémités connectées en commun au point de connexion de l'enroulement primaire (81) et de l'élément de commutation (9),
un circuit de redressement et de lissage (20) pour redresser et lisser la sortie de l'enroulement secondaire (82) et pour délivrer une tension de sortie à courant continu à une charge (25), et
un circuit de commande (40) pour commander le rapport marche/arrêt de l'élément de commutation (9) de sorte que la tension de sortie à courant continu peut être stabilisée.

4. Appareil d'alimentation électrique à découpage selon la revendication 3,
dans lequel
le transformateur (8) comprend, en outre, un enroulement tertiaire (83) comportant une extrémité connectée à chaque borne de l'enroulement primaire (81),
et
le point de connexion des premier et second condensateurs (71,72) est connecté à l'autre extrémité de l'enroulement tertiaire (83).

5. Appareil d'alimentation électrique à découpage selon l'une quelconque des revendications 1 à 4, dans lequel
le circuit de commande (40) détecte la tension du condensateur de lissage (4) ou une tension correspondant à la tension du condensateur de lissage (4) et agit pour faire varier la fréquence de commutation de l'élément de commutation (9) de façon à stabiliser la tension détectée.
